(19) Europäisches Patentamt / European Patent Office / Office européen des brevets

(11) **EP 3 384 589 B1**

(12) **FASCICULE DE BREVET EUROPEEN**

(45) Date de publication et mention de la délivrance du brevet:
**21.08.2019 Bulletin 2019/34**

(21) Numéro de dépôt: **16805155.5**

(22) Date de dépôt: **02.12.2016**

(51) Int Cl.:
*H02M 3/335* *(2006.01)*        *H02M 3/156* *(2006.01)*

(86) Numéro de dépôt international:
**PCT/EP2016/079641**

(87) Numéro de publication internationale:
**WO 2017/093515 (08.06.2017 Gazette 2017/23)**

(54) **PROCÉDÉ DE CONTRÔLE D'UN CONVERTISSEUR CONTINU/CONTINU ET CONVERTISSEUR CONTINU/CONTINU POUR LA MISE EN ŒUVRE D'UN TEL PROCÉDÉ DE CONTRÔLE**

VERFAHREN ZUR STEUERUNG EINES GLEICHSTROMWANDLERS UND GLEICHSTROMWANDLER ZUR IMPLEMENTIERUNG SOLCH EINES STEUERUNGSVERFAHRENS

METHOD FOR CONTROLLING A DC/DC CONVERTER AND DC/DC CONVERTER FOR IMPLEMENTING SUCH A CONTROL METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2015 FR 1561867**

(43) Date de publication de la demande:
**10.10.2018 Bulletin 2018/41**

(73) Titulaire: **Safran Electronics & Defense 92100 Boulogne-Billancourt (FR)**

(72) Inventeur: **GRIMAUD, Louis 92100 Boulogne Billancourt (FR)**

(74) Mandataire: **Cabinet Le Guen Maillet 3, impasse de la Vigie CS 71840 35418 Saint-Malo Cedex (FR)**

(56) Documents cités:
DE-A1- 4 136 809          DE-A1-102015 102 417
US-A1- 2007 063 682      US-A1- 2015 349 630
US-B1- 6 366 070

• MORRONI J ET AL: "Robust Adaptive Tuning of Digitally Controlled Switched-Mode Power Supplies", APPLIED POWER ELECTRONICS CONFERENCE AND EXPOSITION, 2009. APEC 2009. TWENTY-FOURTH ANNUAL IEEE, IEEE, PISCATAWAY, NJ, USA, 15 février 2009 (2009-02-15), pages 240-246, XP031442683, ISBN: 978-1-4244-2811-3
• JING XIAOCHENG ET AL: "A Fast Fixed-Frequency Adaptive-On-Time Boost Converter With Light Load Efficiency Enhancement and Predictable Noise Spectrum", IEEE JOURNAL OF SOLID-STATE CIRCUITS, IEEE SERVICE CENTER, PISCATAWAY, NJ, USA, vol. 48, no. 10, 1 octobre 2013 (2013-10-01), pages 2442-2456, XP011527454, ISSN: 0018-9200, DOI: 10.1109/JSSC.2013.2269852 [extrait le 2013-09-20]

**EP 3 384 589 B1**

## Description

La présente invention concerne un procédé de contrôle d'un convertisseur continu/continu, dit encore alimentation à découpage ainsi qu'un tel convertisseur continu/continu.

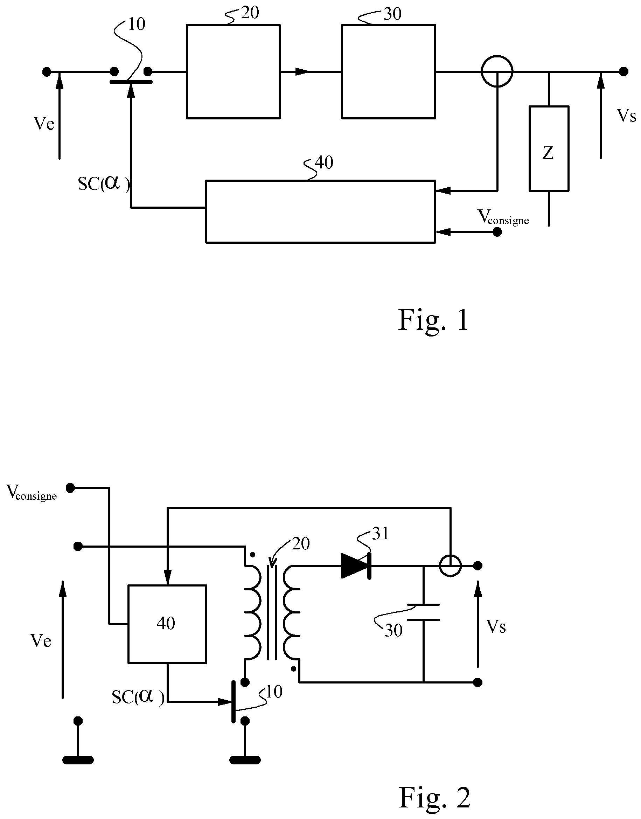

Le principe général d'un convertisseur continu/continu est illustré à la Fig. 1. Une tension d'entrée Ve est périodiquement découpée au moyen d'un élément de commutation 10 si bien que, dans une première partie de chaque période, l'énergie électrique est accumulée dans un élément d'accumulation 20 puis, dans une seconde partie de cette période, l'énergie accumulée est transférée dans un élément de stockage 30. Dans la première partie de la période suivante, alors que l'énergie électrique est de nouveau accumulée dans l'élément d'accumulation 20, l'énergie stockée à la période précédente est utilisée pour alimenter une charge Z. La tension de sortie aux bornes de la charge Z est régulée par une unité de contrôle 40 qui reçoit, d'une part, des informations sur les conditions électriques en sortie (par exemple, la tension de sortie) et, d'autre part, une consigne, par exemple sous forme d'une tension V consigne. Cette unité de contrôle 40 pilote l'élément de commutation 10 de manière que la consigne soit respectée.

Diverses configurations de convertisseurs continu/continu sont connues. On peut citer les montages dits Buck, Boost, Buck-Boost, Flyback, etc.

A la Fig. 2, on a représenté à titre d'exemple un montage dit Flyback dans lequel l'élément d'accumulation 20 est un transformateur, l'élément de stockage 30 est un condensateur qui est isolé de l'enroulement secondaire du transformateur 20, pendant la première partie de chaque période, par une diode 31.

Il est connu que de tels convertisseurs continu/continu peuvent fonctionner dans au moins deux modes distincts : l'un est dit mode en conduction continue (acronyme : CCM pour Continuous Conduction Mode), l'autre est dit mode en conduction discontinue (acronyme : DCM pour Discontinuous Conduction Mode). Dans le mode CCM, la seconde partie d'une période est plutôt courte si bien que l'énergie accumulée dans l'élément d'accumulation 20 ne s'annule pas à la fin de cette partie de période. Au contraire, dans le mode DCM, l'énergie accumulée dans l'élément d'accumulation 20 s'annule.

On peut montrer que, dans le mode CCM, le rapport de conversion en tension est uniquement fonction du rapport cyclique de la période de commutation de l'élément de commutation 10, c'est-à-dire le rapport de la première partie de la période sur la période, généralement noté $\alpha$. Ainsi, par exemple en ce qui concerne le montage Flyback de la Fig. 2, on peut montrer que, dans le mode CCM, le rapport de la tension de sortie Vs à la tension d'entrée Ve s'exprime de la manière suivante :

$$Vs/Ve = \alpha/N(1-\alpha)$$

où $\alpha$ est le rapport cyclique de la commutation et N est le rapport ns/np du nombre ns de spires de l'enroulement secondaire sur le nombre np de spires de l'enroulement primaire du transformateur 20. On notera en particulier que ce rapport de conversion est indépendant de la valeur de la charge Z et donc du courant débité en sortie.

Au contraire, dans le mode DCM, ce rapport de conversion Vs/Ve est fonction de la valeur de la charge Z et donc, d'une certaine manière, du courant débité. Par exemple, dans le cas d'un montage Flyback, ce rapport de conversion s'exprime de la manière suivante :

$$Vs/Ve = \alpha.\sqrt{\frac{Z}{2.Lp.fd}}$$

où Z est la valeur de la charge Z, Lp est l'inductance du transformateur 20 vue de son primaire et fd la fréquence du commutation de l'élément de commutation 10.

Pour tout type d'alimentation à découpage, on peut, de même manière, écrire :

$$Vs/Ve = c(\alpha) \text{ pour le mode CCM et } Vs/Ve = d(Z, Lp, fd, \alpha, \text{etc.})$$

De manière générale et au-delà de ce qui vient d'être dit, les caractéristiques aussi bien statiques que dynamiques de ces deux modes de fonctionnement sont différentes si bien qu'en général, afin d'assurer une bonne stabilité de la régulation et de tenir de bonnes performances notamment dynamiques, l'unité de contrôle 40 assure une régulation exclusivement soit sur la base de la tension de sortie, soit sur la base du courant de sortie, dépendant du mode de fonctionnement choisi.

Néanmoins, suite à des variations souvent non réellement contrôlées de la charge, notamment, il est possible qu'il y ait passage d'un mode de fonctionnement à un autre. Dans ce cas, il y a une dégradation des performances de la régulation effectuée par l'unité de contrôle 40.

Une première solution à ce problème de dégradation des performances de régulation lors du changement d'un mode de fonctionnement à un autre consiste à ce que l'unité de contrôle 40 assure une régulation aussi bien sur la base de la tension de sortie que sur celle du courant de sortie ainsi qu'une gestion analogique du changement de mode. Cependant, cette régulation duale tension/courant nécessite généralement des composants supplémentaires, tel qu'un transformateur de courant, un contrôleur de courant, un correcteur, etc. ce qui grève le coût d'une telle solution.

Une seconde solution consiste en ce que l'unité de contrôle 40 assure une régulation exclusivement en tension et soit équipée d'un correcteur spécialement synthétisé pour assurer la stabilité du mode de conduction continue (celui qui est le plus délicat à corriger d'un point de vue dynamique). Cependant, généralement une régulation exclusivement en tension (exclusivement en courant aussi) dégrade fortement les performances en mode de conduction discontinue, notamment en ce qui concerne le temps de réponse qui est très faible, ce qui introduit des distorsions harmoniques et des pertes).

De l'art antérieur pertinent pour l'invention est le document US2007/063682. Ce document décrit un procédé de contrôle pour un convertisseur continu/continu dans lequel on applique deux modes de régulation différentes: un premier mode quand le convertisseur se trouve dans un mode en conduction continue et un deuxième mode en conduction discontinue. à Le but de la présente invention est donc de proposer un convertisseur continu/continu dont l'unité de contrôle assure une régulation et une stabilité avec des performances optimales aussi bien en mode de conduction continue qu'en mode de conduction discontinue.

La présente invention concerne également un procédé de contrôle d'un tel convertisseur, notamment mis en oeuvre par une unité de contrôle. Un tel procédé de contrôle d'un convertisseur continu/continu du type comprenant un élément d'accumulation d'énergie, un élément de stockage d'énergie et un élément de commutation, comporte classiquement les étapes suivantes mises en oeuvre par une unité de contrôle:

- une étape de génération d'un signal de commande de l'élément de commutation avec un rapport cyclique $\alpha$ fonction d'information sur les conditions électriques en sortie dudit convertisseur, et
- une étape de commande dudit élément de commutation au moyen dudit signal de commande.

Selon la présente invention, ce procédé de contrôle est caractérisé en ce qu'il comporte en outre:

- une étape de correction dudit signal de commande pour un mode de conduction continue,
- une étape de correction dudit signal de commande pour un mode de conduction discontinue,
- une étape d'estimation du mode de fonctionnement actuel dudit convertisseur afin de commander la mise en oeuvre de l'une ou l'autre étape de correction en fonction du mode de fonctionnement actuel estimé.

Toujours selon la présente invention, ladite étape d'estimation comprend les étapes suivantes:

- une étape de calcul du rapport cyclique théorique en mode de conduction continue,
- une étape de calcul de la valeur théorique du rapport cyclique limite entre les deux modes de fonctionnement CCM et DCM,
- une étape de comparaison de la valeur du rapport cyclique théorique en mode de conduction continue, de la valeur théorique du rapport cyclique limite et de la valeur du rapport cyclique actuel, et
- une étape de détermination du mode de conduction continue CCM si la valeur du rapport cyclique actuel est supérieure à la valeur du rapport cyclique théorique en mode de conduction continu,
- une étape de détermination du mode de conduction discontinue DCM si la valeur du rapport cyclique actuel est inférieure à la valeur théorique du rapport cyclique limite, et
- une étape d'indétermination du mode de fonctionnement si la valeur du rapport cyclique actuel est comprise entre la valeur théorique du rapport cyclique limite et la valeur du rapport cyclique théorique en mode de conduction continue.

Ce procédé de contrôle comporte des caractéristiques avantageuses qui sont exprimées dans la suite de la description de modes de réalisation particuliers.

La présente invention concerne également un convertisseur continu/continu pour la mise en oeuvre du présent procédé de contrôle tel qu'il vient d'être décrit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 est un schéma synoptique général d'un convertisseur continu/continu,

La Fig. 2 est un schéma synoptique d'un convertisseur continu/continu du type Flyback,

La Fig. 3 est un schéma synoptique général d'un convertisseur continu/continu selon la présente invention,

La Fig. 4 est une vue pour illustrer un procédé de contrôle selon la présente invention,

La Fig. 5 est une vue pour illustrer l'étape d'estimation de mode d'un procédé de contrôle selon la présente invention, et

La Fig. 6 est un schéma synoptique montrant les moyens d'estimateur d'une unité de contrôle d'un convertisseur continu/continu selon la présente invention.

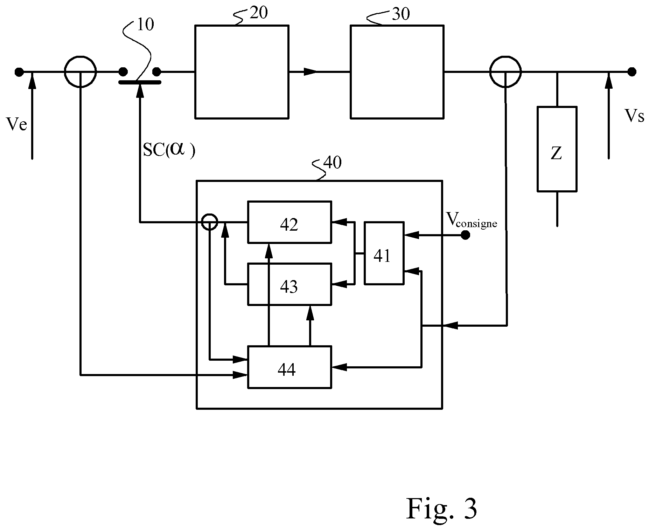

La Fig. 3 représente un convertisseur continu/continu selon la présente invention et reprend le schéma synoptique général de la Fig. 1. Les mêmes éléments qu'à la Fig. 1 portent les mêmes références. Selon l'invention, l'unité de contrôle 40 comprend un régulateur 41, un correcteur pour le mode de conduction continue 42, un correcteur pour le mode de conduction discontinue 43 et un estimateur de mode 44.

Le régulateur 41 a une entrée pour la réception d'une information sur les conditions électriques en sortie (par exemple, tension de sortie) mesurées à la sortie de l'alimentation et une entrée pour la consigne, par exemple sous la forme d'une tension. Il génère un signal de commande sous la forme d'un signal périodique de fréquence donnée et de rapport cyclique variable. Un tel régulateur 41 est connu de l'homme du métier.

Les correcteurs 42 et 43 sont également connus de l'homme du métier. Ils sont respectivement des correcteurs classiques pour le mode de fonctionnement considéré. Ils délivrent un signal de commande SC de l'élément de commutation 10 sous forme d'un signal périodique de fréquence donnée et de rapport cyclique variable $\alpha$.

L'estimateur 44 reçoit sur une première entrée une information sur les conditions électriques en sortie, par exemple la valeur de la tension de sortie Vs, sur une seconde entrée une information sur les conditions électriques en entrée, par exemple la valeur de la tension d'entrée Ve et sur une troisième entrée une mesure du rapport de cyclique du signal de commande en sortie de l'un ou l'autre correcteur 42, 43. L'estimateur 44 estime le mode de fonctionnement présent et commande l'activité du correcteur 42 ou 43 correspondant au mode de fonctionnement estimé.

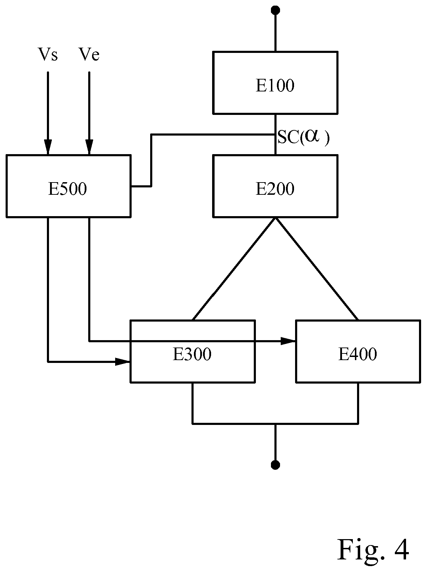

Le procédé de contrôle qui est mis en oeuvre par l'unité de contrôle 40 est illustré à la Fig. 4 et comprend, d'une manière connue en soi, une étape E100 de génération d'un signal de commande SC($\alpha$) de l'élément de commutation 10 ayant un rapport cyclique $\alpha$ qui est fonction d'information sur les conditions électriques en sortie dudit convertisseur (tension ou courant en sortie du convertisseur) et une étape E200 de commande dudit élément de commutation 10 au moyen dudit signal de commande SC($\alpha$) généré à l'étape E100.

Selon la présente invention, ce procédé de contrôle comporte une étape E300 de correction dudit signal de commande pour le mode de conduction continue (CCM) dudit convertisseur (étape mise en oeuvre par le correcteur du mode CCM 42), une étape E400 de correction dudit signal de commande pour le mode de conduction discontinue (DCM) (étape mise en oeuvre par le correcteur du mode DCM 43) et une étape E500 d'estimation (mise en oeuvre par l'estimateur 44 du convertisseur) du mode de fonctionnement actuel dudit convertisseur afin de commander la mise en oeuvre soit de l'étape E300, soit de l'étape E400, en fonction du mode de fonctionnement actuel estimé.

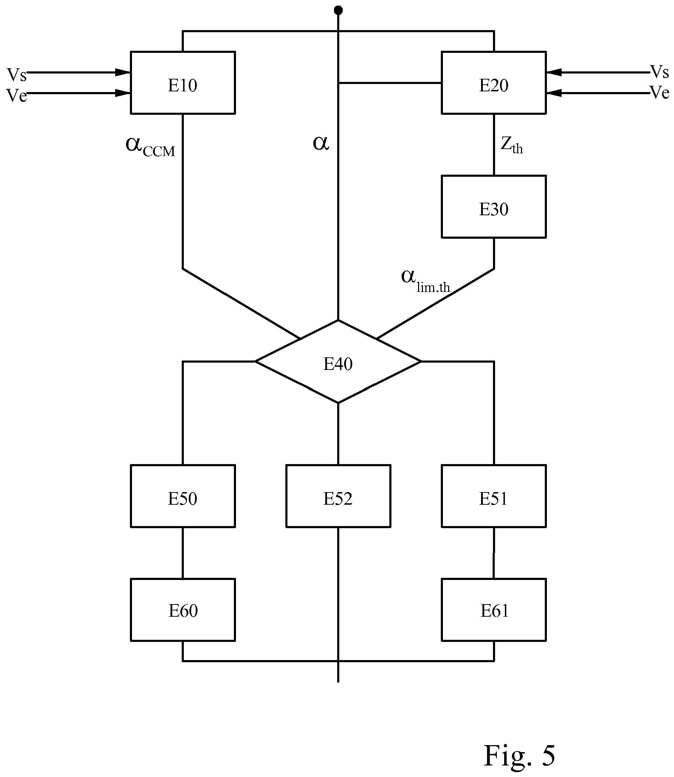

L'étape d'estimation E500 est maintenant décrite en relation avec la Fig. 5. Elle comprend, mise en oeuvre périodiquement par l'estimateur 44, les étapes suivantes :

-    une étape E10 de calcul du rapport cyclique théorique $\alpha_{CCM}$ en mode de conduction continue, lequel ne dépend que des tensions d'entrée Ve et de sortie Vs, soit :

$$\alpha_{CCM} = f(Vs/Ve),$$

-    une étape E20 de calcul de la valeur théorique actuelle de la charge $Z_{th}$ en considérant que le convertisseur fonctionne de manière stable dans un mode de conduction discontinue et en considérant la valeur du rapport cyclique $\alpha$ du signal de commande SC($\alpha$) de l'élément de commutation 10, le rapport de la tension de sortie Vs et de la tension d'entrée Ve, les valeurs hors charge des composants constituant le convertisseur et les valeurs des différents paramètres de fonctionnement du convertisseur, telles que la fréquence $f_d$ du signal de commande SC. Par exemple, dans le cas d'un convertisseur du type Flyback, la charge théorique $Z_{th}$ peut être calculée à partir de l'expression suivante :

$$Z_{th} = \frac{2 L_p f_d}{\left(\dfrac{Ve}{Vs} . \alpha\right)^2}$$

où $L_p$ est l'inductance du transformateur 20 vue de son primaire et $f_d$ la fréquence de commutation de l'élément de commutation 10. De manière générale, la charge théorique $Z_{th}$ peut être calculée à partir d'une expression de type suivant:

$$Z_{th} = g(\alpha, Vs/Ve, f_d, \text{valeurs de composants, etc.})$$

On a pu démontrer, par simulation, que, du fait que les différents éléments du convertisseur de la puissance dissipent de l'énergie, par exemple sous forme d'énergie thermique, la valeur théorique de la charge $Z_{th}$ est nécessairement inférieure à la valeur réelle de la charge Z.

- une étape E30 de calcul de la valeur théorique du rapport cyclique limite entre les deux modes de fonctionnement CCM et DCM, valeur notée $\alpha_{lim.th}$ en considérant le rapport de la tension de sortie Vs et de la tension d'entrée Ve, les valeurs hors charge des composants constituant le convertisseur et les valeurs des différents paramètres de fonctionnement du convertisseur, telles que la fréquence $f_d$ du signal de commande SC. Par exemple, dans le cas d'un convertisseur du type Flyback, la valeur théorique du rapport cyclique limite $\alpha_{lim.th}$ peut être calculée à partir de l'expression suivante :

$$\alpha_{lim.th} = 1 - \sqrt{\frac{2.L_p.f_d}{Z_{th}.N^2}}$$

De manière générale, la valeur théorique du rapport cyclique limite $\alpha_{lim.th}$ peut être calculée à partir d'une expression de type suivant:

$$\alpha_{lim.th} = h(Z_{th}, f_d, \text{valeurs de composants, etc.})$$

On a également pu vérifier que la valeur théorique du rapport cyclique limite $\alpha_{lim.th}$ est nécessairement inférieure à la valeur réelle du rapport cyclique limite réelle.

- une étape E40 de comparaison de la valeur du rapport cyclique théorique $\alpha_{CCM}$ en mode de conduction continue, de la valeur théorique du rapport cyclique limite $\alpha_{lim.th}$ et de la valeur du rapport cyclique actuel $\alpha$ et, suite à cette comparaison,
- une étape E50 de détermination du mode de conduction continue CCM si la valeur du rapport cyclique actuel $\alpha$ est supérieure à la valeur du rapport cyclique théorique $\alpha_{CCM}$ en mode de conduction continue,
- une étape E51 de détermination du mode de conduction discontinue DCM si la valeur du rapport cyclique actuel $\alpha$ est inférieure à la valeur théorique du rapport cyclique limite $\alpha_{lim.th}$,
- une étape E52 d'indétermination du mode de fonctionnement si la valeur du rapport cyclique actuel $\alpha$ est comprise entre la valeur théorique du rapport cyclique limite $\alpha_{lim.th}$ et la valeur du rapport cyclique théorique $\alpha_{CCM}$ en mode de conduction continue.

Suite à l'étape E50, l'unité de contrôle 40 met en oeuvre une étape E60 d'activation de la mise en oeuvre de l'étape de correction en mode de conduction continue E300 si celle-ci n'est pas déjà activée et, suite à l'étape E51, une étape E61 d'activation de la mise en oeuvre de l'étape de correction en mode de conduction discontinue E400 si celle-ci n'est pas déjà activée. Enfin, suite à l'étape E52, aucun changement n'est opéré.

Les étapes E100, E200, E300, E400 et E500 du procédé de contrôle selon la présente invention sont mises en oeuvre par des moyens correspondants de l'unité de contrôle 40 (voir Fig. 3).

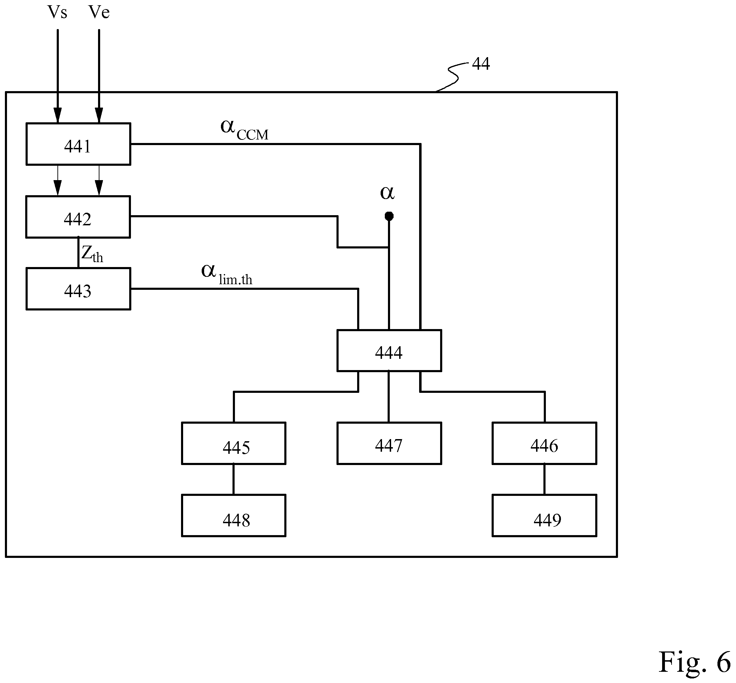

Plus spécifiquement (voir Fig. 6), l'étape d'estimation E500 est mise en oeuvre par un estimateur 44 qui comporte les moyens suivants, pour ce faire :

- des moyens de calcul 441 pour mettre en oeuvre l'étape E10 de calcul du rapport cyclique théorique $\alpha_{CCM}$ en mode de conduction continue,
- des moyens de calcul 442 pour mettre en oeuvre l'étape E20 de calcul de la valeur théorique actuelle de la charge $Z_{th}$,
- des moyens de calcul 443 pour mettre en oeuvre l'étape E30 de calcul de la valeur théorique du rapport cyclique limite $\alpha_{lim.th}$ entre les deux modes de fonctionnement CCM et DCM,
- des moyens de comparaison 444 pour mettre en oeuvre l'étape E40 de comparaison de la valeur du rapport cyclique

théorique $\alpha_{CCM}$ en mode de conduction continue, de la valeur théorique du rapport cyclique limite $\alpha_{lim.th}$ et de la valeur du rapport cyclique actuel $\alpha$,

- des moyens 445 pour mettre en oeuvre l'étape E50 de détermination du mode de conduction continue CCM si la valeur du rapport cyclique actuel $\alpha$ est supérieure à la valeur du rapport cyclique théorique $\alpha_{CCM}$ en mode de conduction continue,
- des moyens 446 pour mettre en oeuvre l'étape E51 de détermination du mode de conduction discontinue DCM si la valeur du rapport cyclique actuel $\alpha$ est inférieure à la valeur théorique du rapport cyclique limite $\alpha_{lim.th}$, et
- des moyens 447 pour mettre en l'étape E52 d'indétermination du mode de fonctionnement si la valeur du rapport cyclique actuel $\alpha$ est comprise entre la valeur théorique du rapport cyclique limite $\alpha_{lim.th}$ et la valeur du rapport cyclique théorique $\alpha_{CCM}$ en mode de conduction continue.

Ces moyens peuvent être matériels (hardware) ou logiciels (software). Dans ce dernier cas, l'unité de contrôle 40 peut être un circuit intégré, du type microcontrôleur, spécialisé programmable. Les moyens 41, 42 et 43 ainsi que les moyens 441 à 447 sont alors des parties de programme ou sous-programmes qui comprennent des instructions ou parties de code pour la mise en oeuvre des étapes correspondantes du procédé de contrôle selon l'invention, lorsque ledit programme est exécuté par l'unité de contrôle 40. Par exemple, ces parties de programme ou sous-programmes sont mémorisés dans une mémoire morte (non représentée) de l'unité de contrôle 40.

## Revendications

1. Procédé de contrôle d'un convertisseur continu/continu comprenant un élément (20) d'accumulation d'énergie, un élément (30) de stockage d'énergie et un élément de commutation (10), ledit procédé de contrôle comportant les étapes suivantes mises en oeuvre par une unité de contrôle (40):

   - une étape (E100) de génération d'un signal de commande (SC) de l'élément de commutation (10) avec un rapport cyclique $\alpha$ fonction d'information sur les conditions électriques en sortie dudit convertisseur, et
   - une étape (E200) de commande dudit élément de commutation (10) au moyen dudit signal de commande (SC),

   **caractérisé en ce qu'**il comporte en outre:

   - une étape (E300) de correction dudit signal de commande (SC) pour un mode de conduction continue,
   - une étape (E400) de correction dudit signal de commande (SC) pour un mode de conduction discontinue,
   - une étape (E500) d'estimation du mode de fonctionnement actuel dudit convertisseur afin de commander la mise en oeuvre soit de l'étape de correction en mode de conduction continue (E300), soit l'étape de correction de mode de conduction discontinue (E400), en fonction du mode de fonctionnement actuel estimé,

   ladite étape d'estimation (E500) comprenant les étapes suivantes:

   - une étape (E10) de calcul du rapport cyclique théorique ($\alpha_{CCM}$) en mode de conduction continue,
   - une étape (E30) de calcul de la valeur théorique du rapport cyclique limite ($\alpha_{lim.th}$) entre les deux modes de fonctionnement CCM et DCM, la valeur théorique du rapport cyclique limite ($\alpha_{lim.th}$) pouvant être calculée à partir de l'expression suivante :

$$\alpha_{lim.th} = 1 - \sqrt{\frac{2.L_p.f_d}{Z_{th}.N^2}}$$

   où $L_p$ est l'inductance d'un transformateur (20) vue de son primaire, le transformateur étant l'élément d'accumulation (20), $f_d$ la fréquence de commutation de l'élément de commutation (10), $Z_{th}$ la valeur théorique de la charge et N le rapport du nombre de spires du transformateur (20),
   - une étape (E40) de comparaison de la valeur du rapport cyclique théorique ($\alpha_{CCM}$) en mode de conduction continue, de la valeur théorique du rapport cyclique limite ($\alpha_{lim.th}$) et de la valeur du rapport cyclique actuel ($\alpha$) et
   - une étape (E50) de détermination du mode de conduction continue CCM si la valeur du rapport cyclique actuel ($\alpha$) est supérieure à la valeur du rapport cyclique théorique ($\alpha_{CCM}$) en mode de conduction continue,
   - une étape (E51) de détermination du mode de conduction discontinue DCM si la valeur du rapport cyclique actuel ($\alpha$) est inférieure à la valeur théorique du rapport cyclique limite ($\alpha_{lim.th}$),

- une étape (E52) d'indétermination du mode de fonctionnement si la valeur du rapport cyclique actuel $\alpha$ est comprise entre la valeur théorique du rapport cyclique limite ($\alpha_{lim.th}$) et la valeur du rapport cyclique théorique ($\alpha_{CCM}$) en mode de conduction continue.

2. Procédé de contrôle selon la revendication 1, **caractérisé en ce qu'**il comporte une étape (E20) de calcul de la valeur théorique actuelle de la charge ($Z_{th}$) en considérant que le convertisseur fonctionne de manière stable sur un mode de conduction discontinue et en considérant la valeur du rapport cyclique $\alpha$ du signal de commande (SC) de l'élément de commutation (10), le rapport de la tension de sortie (Vs) et de la tension d'entrée (Ve), les valeurs hors charge des composants constituant le convertisseur et les valeurs des différents paramètres de fonctionnement du convertisseur, telles que la fréquence ($f_d$) du signal de commande (SC).

3. Procédé de contrôle selon la revendication 2, ledit convertisseur étant du type Flyback, dans l'élément de stockage (30) est un condensateur qui est isolé de l'enroulement secondaire du transformateur (20), pendant la première partie de chaque période, par une diode (31), **caractérisé en ce que** la valeur théorique actuelle de la charge ($Z_{th}$) calculée à l'étape (E20) est donnée par la relation :

$$Z_{th} = \frac{2.L_p.f_d}{\left(\dfrac{Ve}{Vs}.\alpha\right)^2}$$

où $L_p$ est l'inductance du transformateur (20) vue de son primaire, ($f_d$) la fréquence de commutation de l'élément de commutation (10), (Ve) la tension d'entrée du convertisseur, (Vs) la tension de sortie du convertisseur et ($\alpha$) le rapport cyclique du signal de commande (SC) appliqué à l'élément de commutation (10).

4. Procédé de contrôle selon la revendication 2 ou 3, **caractérisé en ce que** ladite étape (E30) de calcul de la valeur théorique du rapport cyclique limite ($\alpha_{lim.th}$) entre les deux modes de fonctionnement CCM et DCM est mise en oeuvre en considérant le rapport de la tension de sortie (Vs) et de la tension d'entrée (Ve), les valeurs hors charge des composants constituant le convertisseur et les valeurs des différents paramètres de fonctionnement du convertisseur, telles que la fréquence ($f_d$) du signal de commande (SC), ainsi que la valeur théorique de la charge ($Z_{th}$).

5. Procédé de contrôle selon la revendication 4, **caractérisé en ce que** ledit convertisseur étant du type Flyback, dans lequel l'élément de stockage (30) est un condensateur qui est isolé de l'enroulement secondaire du transformateur (20), pendant la première partie de chaque période, par une diode (31).

6. Procédé de contrôle selon une des revendications précédentes, **caractérisé en ce qu'**il comporte une étape (E60) mise en oeuvre suite à l'étape (E50) d'activation de la mise en oeuvre de l'étape de correction en mode de conduction continue (E300) si celle-ci n'est pas déjà activée et une étape (E61) mise en oeuvre suite à l'étape (E51) d'activation de la mise en oeuvre de l'étape de correction en mode de conduction discontinue (E400) si celle-ci n'est pas déjà activée.

7. Convertisseur continu/continu comprenant un élément (20) d'accumulation d'énergie, un élément (30) de stockage d'énergie, un élément de commutation (10), et une unité de contrôle (40) pour générer un signal de commande de l'élément de commutation (10) avec un rapport cyclique $\alpha$ fonction d'information sur les conditions électriques en sortie dudit convertisseur et pour commander ledit élément de commutation (10) au moyen dudit signal de commande, **caractérisé en ce qu'**il comporte en outre:

   - un correcteur (42) pour un mode de conduction continue,
   - un correcteur (43) pour un mode de conduction discontinue,
   - un estimateur de mode (44) pour estimer le mode de fonctionnement actuel afin de commander, en fonction du mode de fonctionnement actuel estimé, l'activation soit du correcteur pour le mode de conduction continue, soit du correcteur pour le mode de conduction discontinue,

   ledit estimateur de mode (44) comprenant les moyens suivants:

   - des moyens (441) de calcul du rapport cyclique théorique $\alpha_{CCM}$ en mode de conduction continue,
   - des moyens (443) de calcul de la valeur théorique du rapport cyclique limite $\alpha_{lim.th}$ entre les deux modes de fonctionnement CCM et DCM, la valeur théorique du rapport cyclique limite ($\alpha_{\text{lim.th}}$) pouvant être calculée à partir de l'expression suivante :

$$\alpha_{\text{lim.th}} = 1 - \sqrt{\frac{2.L_p.f_d}{Z_{\text{th}}.N^2}}$$

où $L_p$ est l'inductance d'un transformateur (20) vue de son primaire, le transformateur étant l'élément d'accumulation (20), $f_d$ la fréquence de commutation de l'élément de commutation (10), $Z_{\text{th}}$ la valeur théorique de la charge et N le rapport du nombre de spires du transformateur (20),
- des moyens (444) de comparaison de la valeur du rapport cyclique théorique $\alpha_{\text{CCM}}$ en mode de conduction continue, de la valeur théorique du rapport cyclique limite $\alpha_{\text{lim.th}}$ et de la valeur du rapport cyclique actuel $\alpha$ et
- des moyens (445) de détermination du mode de conduction continue CCM si la valeur du rapport cyclique actuel $\alpha$ est supérieure à la valeur du rapport cyclique théorique $\alpha_{\text{CCM}}$ en mode de conduction continue,
- des moyens (446) de détermination du mode de conduction discontinue DCM si la valeur du rapport cyclique actuel $\alpha$ est inférieure à la valeur théorique du rapport cyclique limite $\alpha_{\text{lim.th}}$,
- des moyens (447) d'indétermination du mode de fonctionnement si la valeur du rapport cyclique actuel $\alpha$ est comprise entre la valeur théorique du rapport cyclique limite $\alpha_{\text{lim.th}}$ et la valeur du rapport cyclique théorique $\alpha_{\text{CCM}}$ en mode de conduction continue.

8. Convertisseur selon la revendication 7, **caractérisé en ce qu'**il comporte des moyens (442) de calcul de la valeur théorique actuelle de la charge $Z_{\text{th}}$ en considérant que l'alimentation fonctionne de manière stable sur un mode de conduction discontinue et en considérant la valeur du rapport cyclique $\alpha$ du signal de commande de l'élément de commutation (10), le rapport de la tension de sortie Vs et de la tension d'entrée Ve, les valeurs hors charge des composants constituant le convertisseur et les valeurs des différents paramètres de fonctionnement du convertisseur, telles que la fréquence $f_d$ du signal de commande (SC).

9. Convertisseur selon la revendication 8, **caractérisé en ce qu'**il comporte lesdits moyens (443) de calcul de la valeur théorique du rapport cyclique limite $\alpha_{\text{lim.th}}$ entre les deux modes de fonctionnement CCM et DCM qui tiennent compte du rapport de la tension de sortie Vs et de la tension d'entrée Ve, les valeurs hors charge des composants constituant le convertisseur et les valeurs des différents paramètres de fonctionnement du convertisseur, telles que la fréquence $f_d$ du signal de commande (SC), ainsi que la valeur théorique de la charge $Z_{\text{th}}$.

10. Convertisseur selon une des revendications 7 à 9, **caractérisé en ce qu'**il comporte des moyens (448) pour activer le correcteur (42) si le mode estimé est le mode CCM et si le correcteur (41) n'est pas déjà activé et des moyens (449) pour activer le correcteur (43) si le mode estimé est le mode DCM et si le correcteur (43) n'est pas déjà activé.

11. Convertisseur selon une des revendications 7 à 9, **caractérisé en ce qu'**il est du type Flyback, dans lequel l'élément de stockage (30) est un condensateur qui est isolé de l'enroulement secondaire du transformateur (20), pendant la première partie de chaque période, par une diode (31).

## Patentansprüche

1. Verfahren zur Kontrolle eines Gleichstrom-Gleichstrom-Wandlers, der ein Energieakkumulationselement (20), ein Energiespeicherelement (30) und ein Schaltelement (10) enthält, wobei das Kontrollverfahren die folgenden Schritte aufweist, die von einer Kontrolleinheit (40) durchgeführt werden:

   - einen Schritt (E100) der Erzeugung eines Steuersignals (SC) des Schaltelements (10) mit einem Tastverhältnis $\alpha$ abhängig von einer Information über die elektrischen Bedingungen am Ausgang des Wandlers, und
   - einen Schritt (E200) der Steuerung des Schaltelements (10) mittels des Steuersignals (SC),

   **dadurch gekennzeichnet, dass** es außerdem aufweist:

   - einen Schritt (E300) der Korrektur des Steuersignals (SC) für einen kontinuierlichen Leitungsmodus,
   - einen Schritt (E400) der Korrektur des Steuersignals (SC) für einen diskontinuierlichen Leitungsmodus,
   - einen Schritt (E500) der Schätzung der aktuellen Betriebsart des Wandlers, um die Durchführung entweder des Korrekturschritts im kontinuierlichen Leitungsmodus (E300) oder des Korrekturschritts im diskontinuierlichen Leitungsmodus zu steuern (E400), abhängig von der geschätzten aktuellen Betriebsart,

wobei der Schätzschritt (E500) die folgenden Schritte enthält:

- einen Schritt (E10) der Berechnung des theoretischen Tastverhältnisses ($\alpha_{CCM}$) im kontinuierlichen Leitungsmodus,
- einen Schritt (E30) der Berechnung des theoretischen Werts des Grenztastverhältnisses ($\alpha_{lim.th}$) zwischen den zwei Betriebsarten CCM und DCM, wobei der theoretische Wert des Grenztastverhältnisses ($\alpha_{lim.th}$) ausgehend vom folgenden Ausdruck berechnet werden kann:

$$a_{lim.th} = 1 - \sqrt{\frac{2.L_p.f_d}{Z_{th}.N^2}}$$

wobei $L_p$ die Induktivität eines Transformators (20) von seiner Primärseite gesehen ist, wobei der Transformator das Akkumulationselement (20), $f_d$ die Schaltfrequenz des Schaltelements (10), $Z_{th}$ der theoretische Wert der Last und N das Verhältnis der Anzahl von Windungen des Transformators (20) ist,
- einen Schritt (E40) des Vergleichs des Werts des theoretischen Tastverhältnisses ($\alpha_{CCM}$) im kontinuierlichen Leitungsmodus, des theoretischen Werts des Grenztastverhältnisses ($\alpha_{lim.th}$) und des Werts des aktuellen Tastverhältnisses ($\alpha$), und
- einen Schritt (E50) der Bestimmung des kontinuierlichen Leitungsmodus CCM, wenn der Wert des aktuellen Tastverhältnisses ($\alpha$) höher als der Wert des theoretischen Tastverhältnisses ($\alpha_{CCM}$) im kontinuierlichen Leitungsmodus ist,
- einen Schritt (E51) der Bestimmung des diskontinuierlichen Leitungsmodus DCM, wenn der Wert des aktuellen Tastverhältnisses ($\alpha$) niedriger als der theoretische Wert des Grenztastverhältnisses ($\alpha_{lim.th}$) ist,
- einen Schritt (E52) der Unbestimmtheit der Betriebsart, wenn der Wert des aktuellen Tastverhältnisses $\alpha$ zwischen dem theoretischen Wert des Grenztastverhältnisses ($\alpha_{lim.th}$) und dem Wert des theoretischen Tastverhältnisses ($\alpha_{CCM}$) im kontinuierlichen Leitungsmodus liegt.

2. Kontrollverfahren nach Anspruch 1, **dadurch gekennzeichnet, dass** es einen Schritt (E20) der Berechnung des aktuellen theoretischen Werts der Last ($Z_{th}$) aufweist, indem davon ausgegangen wird, dass der Wandler stabil in einem diskontinuierlichen Leitungsmodus arbeitet, und indem der Wert des Tastverhältnisses $\alpha$ des Steuersignals (SC) des Schaltelements (10), das Verhältnis der Ausgangsspannung (Vs) und der Eingangsspannung (Ve), die Werte ohne Last der den Wandler bildenden Bestandteile und die Werte der verschiedenen Betriebsparameter des Wandlers, wie die Frequenz (fd) des Steuersignals (SC), berücksichtigt werden.

3. Kontrollverfahren nach Anspruch 2, wobei der Wandler von der Art Flyback ist, bei dem das Speicherelement (30) ein Kondensator ist, der von der Sekundärwicklung des Transformators (20) während des ersten Teils jeder Periode durch eine Diode (31) isoliert ist, **dadurch gekennzeichnet, dass** der im Schritt (E20) berechnete aktuelle theoretische Wert der Last ($Z_{th}$) durch die folgende Beziehung angegeben wird:

$$Z_{th} = \frac{2.L_p.f_d}{\left(\frac{Ve}{Vs}.a\right)^2}$$

wobei $L_p$ die Induktivität des Transformators (20) von seiner Primärseite gesehen, (fd) die Schaltfrequenz des Schaltelements (10), (Ve) die Eingangsspannung des Wandlers, (Vs) die Ausgangsspannung des Wandlers und ($\alpha$) das Tastverhältnis des an das Schaltelement (10) angelegten Steuersignals (SC) ist.

4. Kontrollverfahren nach Anspruch 2 oder 3, **dadurch gekennzeichnet, dass** der Schritt (E30) der Berechnung des theoretischen Werts des Grenztastverhältnisses ($\alpha_{lim.th}$) zwischen den zwei Betriebsarten CCM und DCM unter Berücksichtigung des Verhältnisses der Ausgangsspannung (Vs) und der Eingangsspannung (Ve), der Werte ohne Last der den Wandler bildenden Bestandteile und der Werte der verschiedenen Betriebsparameter des Wandlers, wie die Frequenz ($f_d$) des Steuersignals (SC), sowie des theoretischen Werts der Last ($Z_{th}$) durchgeführt wird.

5. Kontrollverfahren nach Anspruch 4, **dadurch gekennzeichnet, dass** der Wandler von der Art Flyback ist, bei dem das Speicherelement (30) ein Kondensator ist, der von der Sekundärwicklung des Transformators (20) während des ersten Teils jeder Periode durch eine Diode (31) isoliert ist.

6. Kontrollverfahren nach einem der vorhergehenden Ansprüche, **dadurch gekennzeichnet, dass** es einen nach dem Schritt (E50) durchgeführten Schritt (E60) der Aktivierung der Durchführung des Korrekturschritts im kontinuierlichen Leitungsmodus (E300), wenn dieser nicht schon aktiviert ist, und einen nach dem Schritt (E51) durchgeführten Schritt (E61) der Aktivierung der Durchführung des Korrekturschritts im diskontinuierlichen Leitungsmodus (E400) aufweist, wenn dieser nicht schon aktiviert ist.

7. Gleichstrom-Gleichstrom-Wandler, der ein Energieakkumulationselement (20), ein Energiespeicherelement (30), ein Schaltelement (10) und eine Kontrolleinheit (40) enthält, um ein Steuersignal des Schaltelements (10) mit einem Tastverhältnis α abhängig von einer Information über die elektrischen Bedingungen am Ausgang des Wandlers zu erzeugen, und um das Schaltelement (10) mittels des Steuersignals zu steuern, **dadurch gekennzeichnet, dass** er außerdem aufweist:

   - ein Korrekturglied (42) für einen kontinuierlichen Leitungsmodus,
   - ein Korrekturglied (43) für einen diskontinuierlichen Leitungsmodus,
   - ein Modus-Schätzglied (44) zum Schätzen der aktuellen Betriebsart, um abhängig von der geschätzten aktuellen Betriebsart die Aktivierung entweder des Korrekturglieds für den kontinuierlichen Leitungsmodus oder des Korrekturglieds für den diskontinuierlichen Leitungsmodus zu steuern,

   wobei das Modus-Schätzglied (44) die folgenden Einrichtungen enthält:

   - Einrichtungen (441) zur Berechnung des theoretischen Tastverhältnisses $\alpha_{CCM}$ im kontinuierlichen Leitungsmodus,
   - Einrichtungen (443) zur Berechnung des theoretischen Werts des Grenztastverhältnisses $\alpha_{lim.th}$ zwischen den zwei Betriebsarten CCM und DCM, wobei der theoretische Wert des Grenztastverhältnisses ($\alpha_{lim.th}$) ausgehend vom folgenden Ausdruck berechnet werden kann:

$$a_{lim.th} = 1 - \sqrt{\frac{2.\,L_p.\,f_d}{Z_{th}.\,N^2}}$$

   wobei $L_p$ die Induktivität eines Transformators (20) von seiner Primärseite gesehen ist, wobei der Transformator das Akkumulationselement (20), $f_d$ die Schaltfrequenz des Schaltelements (10), $Z_{th}$ der theoretische Wert der Last und N das Verhältnis der Anzahl von Windungen des Transformators (20) ist,
   - Einrichtungen (444) zum Vergleich des Werts des theoretischen Tastverhältnisses $\alpha_{CCM}$ im kontinuierlichen Leitungsmodus, des theoretischen Werts des Grenztastverhältnisses $\alpha_{lim.th}$ und des Werts des aktuellen Tastverhältnisses α, und
   - Einrichtungen (445) zur Bestimmung des kontinuierlichen Leitungsmodus CCM, wenn der Wert des aktuellen Tastverhältnisses α höher als der Wert des theoretischen Tastverhältnisses $\alpha_{CCM}$ im kontinuierlichen Leitungsmodus ist,
   - Einrichtungen (446) zur Bestimmung des diskontinuierlichen Leitungsmodus DCM, wenn der Wert des aktuellen Tastverhältnisses α niedriger als der theoretische Wert des Grenztastverhältnisses $\alpha_{lim.th}$ ist,
   - Einrichtungen (447) zur Unbestimmtheit der Betriebsart, wenn der Wert des aktuellen Tastverhältnisses α zwischen dem theoretischen Wert des Grenztastverhältnisses $\alpha_{lim.th}$ und dem Wert des theoretischen Tastverhältnisses $\alpha_{CCM}$ im kontinuierlichen Leitungsmodus liegt.

8. Wandler nach Anspruch 7, **dadurch gekennzeichnet, dass** er Einrichtungen (442) zur Berechnung des aktuellen theoretischen Werts der Last $Z_{th}$ aufweist, indem davon ausgegangen wird, dass die Versorgung stabil in einem diskontinuierlichen Leitungsmodus arbeitet, und indem der Wert des Tastverhältnisses α des Steuersignals des Schaltelements (10), das Verhältnis der Ausgangsspannung Vs und der Eingangsspannung Ve, die Werte ohne Last der den Wandler bildenden Bestandteile und die Werte der verschiedenen Betriebsparameter des Wandlers, wie die Frequenz $f_d$ des Steuersignals (SC), berücksichtigt werden.

9. Wandler nach Anspruch 8, **dadurch gekennzeichnet, dass** er die Einrichtungen (443) zur Berechnung des theo-

retischen Werts des Grenztastverhältnisses $\alpha_{lim.th}$ zwischen den zwei Betriebsarten CCM und DCM aufweist, die das Verhältnis der Ausgangsspannung Vs und der Eingangsspannung Ve, die Werte ohne Last der den Wandler bildenden Bestandteile und die Werte der verschiedenen Betriebsparameter des Wandlers, wie die Frequenz $f_d$ des Steuersignals (SC), sowie den theoretischen Wert der Last $Z_{th}$ berücksichtigen.

10. Wandler nach einem der Ansprüche 7 bis 9, **dadurch gekennzeichnet, dass** er Einrichtungen (448), um das Korrekturglied (42) zu aktivieren, wenn der geschätzte Modus der Modus CCM ist, und wenn das Korrekturglied (41) nicht schon aktiviert ist, und Einrichtungen (449) aufweist, um das Korrekturglied (43) zu aktivieren, wenn der geschätzte Modus der Modus DCM ist, und wenn das Korrekturglied (43) nicht schon aktiviert ist.

11. Wandler nach einem der Ansprüche 7 bis 9, **dadurch gekennzeichnet, dass** er von der Art Flyback ist, bei dem das Speicherelement (30) ein Kondensator ist, der während des ersten Teils jeder Periode durch eine Diode (31) von der Sekundärwicklung des Transformators (20) isoliert ist.

## Claims

1. A method for controlling a DC-DC converter comprising an energy accumulation element (20), an energy storage element (30) and a switching element (10), said control method comprising the following steps implemented by a control unit (40):

   - a step (E100) of generating a control signal (CS) for the switching element (10) with a duty cycle $\alpha$ that is a function of information relating to the output electrical conditions of said converter; and
   - a step (E200) of controlling said switching element (10) by means of said control signal (CS),

   **characterized in that** it further comprises:

   - a step (E300) of compensating said control signal (CS) for a continuous conduction mode;
   - a step (E400) of compensating said control signal (CS) for a discontinuous conduction mode;
   - a step (E500) of estimating the current operating mode of said converter in order to control the implementation either of the continuous conduction mode compensation step (E300) or of the discontinuous conduction mode compensation step (E400) as a function of the estimated current operating mode;

   said estimating step (E500) comprising the following steps:

   - a step (E10) of computing the theoretical duty cycle ($\alpha_{CCM}$) in continuous conduction mode;
   - a step (E30) of computing the theoretical value of the limit duty cycle ($\alpha_{lim.th}$) between the two CCM and DCM operating modes, the theoretical value of the limit duty cycle ($\alpha_{lim.th}$) being able to be computed on the basis of the following expression:

   $$\alpha_{lim.th} = 1 - \sqrt{\frac{2.L_p.f_d}{Z_{th}.N^2}},$$

   where $L_p$ is the inductance of the transformer (20) with respect to its primary winding, $f_d$ is the switching frequency of the switching element (10), $Z_{th}$ is the theoretical value of the load and N is the ratio of the number of turns of the transformer (20);
   - a step (E40) of comparing the value of the theoretical duty cycle ($\alpha_{CCM}$) in continuous conduction mode, the theoretical value of the limit duty cycle ($\alpha_{lim.th}$) and the value of the current duty cycle ($\alpha$); and
   - a step (E50) of determining the continuous conduction mode CCM if the value of the current duty cycle ($\alpha$) is greater than the value of the theoretical duty cycle ($\alpha_{CCM}$) in continuous conduction mode;
   - a step (E51) of determining the discontinuous conduction mode DCM if the value of the current duty cycle ($\alpha$) is less than the theoretical value of the limit duty cycle ($\alpha_{lim.th}$);
   - a step (E52) of indetermining the operating mode if the value of the current duty cycle ($\alpha$) is between the theoretical value of the limit duty cycle ($\alpha_{lim.th}$) and the value of the theoretical duty cycle ($\alpha_{CCM}$) in continuous conduction mode.

**EP 3 384 589 B1**

2. The control method as claimed in claim 1, **characterized in that** it comprises a step (E20) of computing the current theoretical value of the load ($Z_{th}$) by considering that the converter operates in a stable manner on a discontinuous conduction mode and by considering the value of the duty cycle $\alpha$ of the control signal (CS) of the switching element (10), the ratio of the output voltage (Vs) to the input voltage (Ve), the no-load values of the components forming the converter and the values of the various operating parameters of the converter, such as the frequency ($f_d$) of the control signal (CS).

3. The control method as claimed in claim 2, said converter being of the Flyback type, in which the accumulation element (20) is a transformer, the storage element (30) is a capacitor, which is isolated from the secondary winding of the transformer (20), during the first part of each period, by a diode (31), **characterized in that** the current theoretical value of the load ($Z_{th}$) computed during the step (E20) is provided by the following relation:

$$Z_{th} = \frac{2.L_p.f_d}{\left(\dfrac{Ve}{Vs}.\alpha\right)^2},$$

where $L_p$ is the inductance of the transformer (20) with respect to its primary winding, ($f_d$) is the switching frequency of the switching element (10), (Ve) is the input voltage of the converter, (Vs) is the output voltage of the converter and ($\alpha$) is the duty cycle of the control signal (CS) applied to the switching element (10).

4. The control method as claimed in claim 2 or 3, **characterized in that** said step (E30) of computing the theoretical value of the limit duty cycle ($\alpha_{lim.th}$) between the two CCM and DCM operating modes is implemented by considering the ratio of the output voltage (Vs) to the input voltage (Ve), the no-load values of the components forming the converter and the values of the various operating parameters of the converter, such as the frequency ($f_d$) of the control signal (CS), as well as the theoretical value of the load ($Z_{th}$).

5. The control method as claimed in claim 4, **characterized in that** said converter is of the Flyback type, in which the accumulation element (20) is a transformer, the storage element (30) is a capacitor, which is isolated from the secondary winding of the transformer (20), during the first part of each period, by a diode (31).

6. The control method as claimed in any of the preceding claims, **characterized in that** it comprises a step (E60), implemented following the step (E50), of activating the implementation of the continuous conduction mode compensation step (E300) if this step is not already activated and a step (E61), implemented following the step (E51), of activating the implementation of the discontinuous conduction mode step (E400) if this step is not already activated.

7. A DC-DC converter comprising an energy accumulation element (20), an energy storage element (30), a switching element (10) and a control unit (40) for generating a control signal for the switching element (10) with a duty cycle $\alpha$ that is a function of information relating to the output electrical conditions of said converter and for controlling said switching element (10) by means of said control signal, **characterized in that** it further comprises:

    - a compensator (42) for a continuous conduction mode;
    - a compensator (43) for a discontinuous conduction mode;
    - a mode estimator (44) for estimating the current operating mode in order to control, as a function of the estimated current operating mode, the activation either of the compensator for the continuous conduction mode or of the compensator for the discontinuous conduction mode;

said mode estimator (44) comprising the following means:

    - means (441) for computing the theoretical duty cycle $\alpha_{CCM}$ in continuous conduction mode;
    - means (443) for computing the theoretical value of the limit duty cycle $\alpha_{lim.th}$ between the two CCM and DCM operating modes, the theoretical value of the limit duty cycle ($\alpha_{lim.th}$) being able to be computed on the basis of the following expression:

$$\alpha_{\lim.th} = 1 - \sqrt{\frac{2.L_p.f_d}{Z_{th}.N^2}},$$

where $L_p$ is the inductance of the transformer (20) with respect to its primary winding, $f_d$ is the switching frequency of the switching element (10), $Z_{th}$ is the theoretical value of the load and N is the ratio of the number of turns of the transformer (20);

- means (444) for comparing the value of the theoretical duty cycle $\alpha_{CCM}$ in continuous conduction mode, the theoretical value of the limit duty cycle $\alpha_{\lim.th}$ and the value of the current duty cycle $\alpha$; and

- means (445) for determining the continuous conduction mode CCM if the value of the current duty cycle $\alpha$ is greater than the value of the theoretical duty cycle $\alpha_{CCM}$ in continuous conduction mode;

- means (446) for determining the discontinuous conduction mode DCM if the value of the current duty cycle $\alpha$ is less than the theoretical value of the limit duty cycle $\alpha_{\lim.th}$,

- means (447) for indetermining the operating mode if the value of the current duty cycle $\alpha$ is between the theoretical value of the limit duty cycle $\alpha_{\lim.th}$ and the value of the theoretical duty cycle $\alpha_{CCM}$ in continuous conduction mode.

8. The converter as claimed in claim 7, **characterized in that** it comprises means (442) for computing the current theoretical value of the load $Z_{th}$ by considering that the power supply operates in a stable manner on a discontinuous conduction mode and by considering the value of the duty cycle $\alpha$ of the control signal of the switching element (10), the ratio of the output voltage Vs to the input voltage Ve, the no-load values of the components forming the converter and the values of the various operating parameters of the converter, such as the frequency $f_d$ of the control signal (CS).

9. The converter as claimed in claim 8, **characterized in that** it comprises said means (443) for computing the theoretical value of the limit duty cycle $\alpha_{\lim.th}$ between the two CCM and DCM operating modes that take into account the ratio of the output voltage Vs to the input voltage Ve, the no-load values of the components forming the converter and the values of the various operating parameters of the converter, such as the frequency $f_d$ of the control signal (CS), as well as the theoretical value of the load Zth.

10. The converter as claimed in any of claims 7 to 9, **characterized in that** it comprises means (448) for activating the compensator (42) if the estimated mode is the CCM mode and if the compensator (41) is not already activated and means (449) for activating the compensator (43) if the estimated mode is the DCM mode and if the compensator (43) is not already activated.

11. The converter as claimed in any of claims 7 to 9, **characterized in that** it is of the Flyback type, in which the accumulation element (20) is a transformer, the storage element (30) is a capacitor, which is isolated from the secondary winding of the transformer (20), during the first part of each period, by a diode (31).

Fig. 1

Fig. 2

Fig. 3

Fig. 4

Fig. 5

Fig. 6

**EP 3 384 589 B1**

## RÉFÉRENCES CITÉES DANS LA DESCRIPTION

**Documents brevets cités dans la description**

- US 2007063682 A